# EUROPEAN PATENT SPECIFICATION

(11) **EP 4 757 911 B1**
(45) Date of publication and mention of the grant of the patent: **28.10.2026**
(21) Application number: 25718053.9
(22) Date of filing: 18.03.2025
(51) Int. Cl.: B01D 21/00, B01D 21/02, B01D 21/24, C02F 1/00

(54) **A WASTEWATER DEPOSIT FOR THE ENHANCED DEPOSITION OF RESIDUES**
EIN BEHÄLTER ZUR VERBESSERTEN ABLAGERUNG VON ABWASSERRÜCKSTÄNDEN
UN RÉSERVOIR POUR LE DÉPÔT ACCRU DES RÉSIDUS D'EAUX USÉES

(30) Priority: 19.03.2024 PT 2024119330; 22.08.2024 EP 24195891
(43) Date of publication of application: 17.06.2026
(73) Proprietor: Ark - Indústria, Lda, 4430-059 Vila Nova de Gaia (PT)
(72) Inventor: AIRES PEREIRA COSTA, Nelson, 4430-059 Vila Nova de Gaia (PT)
(74) Representative: do Nascimento Gomes, Rui
(86) International application number: PCT/IB2025/052837
(87) International publication number: WO 2025/196644

(56) References cited:
- CN-A- 111 530 130
- US-A1- 2010 200 426
- US-A1- 2015 343 331
- US-A1- 2019 321 756

## Description

### FIELD OF THE INVENTION

The present invention is related to the area of miniaturized, laboratory or experimental setups for water treatment, and provides a miniaturized system for wastewater treatment. The wastewater deposit of the present invention is miniaturized when compared to large scale deposits which are part of wastewater treatment plants.

### PRIOR ART

Solutions are known in the art which seek to simulate the operation of wastewater treatment plants, for educational purposes.

Such solutions simulate the operation of such plants, by including contaminants which are not actual contaminants present in wastewater, and showing trainees operating or following the operation of such systems how a wastewater treatment plant would work.

These systems are not functional and do not allow to actually treat water, at least no more than removing dummy elements from water or showing by different means how a wastewater treatment plant would work in reality.

Thus, they do not require that their components actually operate in order to treat wastewater.

Patent application US 2015/0343331 A1 discloses an industrial settling tank with a curved bottom and a tangential jetting fluid source to augment vortex formation, seeking solids removal efficiency without mechanical rakes, suitable for wastewater and drilling fluid treatment.

Patent application US 2010/0200426 A1 discloses an industrial apparatus and method for phase separation of liquids and solids in manure, comprising coaxial containers with an inner container for flocculation and an outer container for settling, for continuous extraction of separated solids and clarified liquids.

Patent application US 2019/0321756 A1 describes a particle settling device with stacked conical surfaces for enhanced separation of particles from fluids, useful in biological cultures, catalyst recycling, and wastewater treatment, featuring adjustable flow and scalable design.

Patent application CN 111530130 A discloses a sedimentation bottle for collecting, storing, and separating pleural effusion, featuring a storage unit with an inlet, a sediment outlet, and a supernatant outlet, for selective removal of target cells while safely handling supernatant to avoid biological hazards.

Wastewater typically consists of a mixture of water with different types of contaminants, some of which are in suspension in the water. The wastewater deposit of the present invention allows the deposition of deposit residues of such a suspension in an enhanced manner, allowing their further removal.

### SUMMARY OF THE INVENTION

The present invention relates to a wastewater deposit for the enhanced deposition of residues, the deposit having a main reservoir with a top opening and a bottom opening, the reservoir having a frustoconical portion of polyhedric and/or circular cross section and a curved portion, wherein a top of the frustoconical portion forms the top opening, and a bottom of the curved portion forms the bottom opening, the bottom of the frustoconical portion connecting to the top of the curved portion forming a continuous wall of the reservoir, wherein
the top of the frustoconical portion is wider than the bottom of such portion,
the curved portion tapers between its top and bottom forming a curved wall of the reservoir, and such that its top is wider,

and the frustoconical portion has formed in its wall a first side opening formed in its wall suitable for forming a water outlet and a second side opening suitable to provide an inlet for a water suspension,
wherein, when a water suspension of residues is provided within the deposit, the residues aggregate in the curved portion by action of gravity and are removable through the bottom opening and the total volume of the reservoir is of 4-50 l, the reservoir being transparent.

The second side opening may be formed in the frustoconical portion above the first side opening.

The curved portion may be convex, curving outwards.

For a total volume of the reservoir, the volume of the curved portion may be between 1/8 and 1/6 of the total volume.

A first tangent to the wall of the reservoir in the top of the curved portion may form a first angle α of 70-85° with an imaginary central axis of the wastewater deposit formed between the center of the top opening of the frustoconical portion and the center of the bottom opening of the curved portion and a second tangent to the wall of the reservoir in the bottom of the curved portion may form a second angle β of 40-50° with the imaginary line perpendicular to the imaginary central axis.

The sides of the frustoconical portion formed between its top and bottom may form a 2-4° angle θ with an imaginary central axis of the wastewater deposit formed between the center of the top opening of the frustoconical portion and the center of the bottom opening of the curved portion.

The width of the top opening of the frustoconical portion may be between 150 and 500 mm, and/or the width of the bottom opening of the curved portion may be between 30 and 80 mm.

The bottom opening of the curved portion may be centrally provided in relation to the walls of the reservoir.

The reservoir may be composed of polycarbonate. The reservoir may specifically be composed of crystalline polycarbonate.

The reservoir may have one or more additional side openings, the additional side openings being formed in the frustoconical portion and being suitable to provide a sensor.

The one or more additional side openings and/or second side opening may have a width which corresponds to the width of a normalized watertight coupling to provide an inlet for a water suspension or a sensor.

The deposit may further comprise vertical column coupling means, comprising a bottom facing recess formed from the top opening of the frustoconical portion and along an external part of the frustoconical portion, suitable for the coupling to a vertical column.

The top opening of the frustoconical portion may be closed, forming a top surface of the reservoir.

The top opening of the frustoconical portion may have coupling means suitable for a cover to be coupled.

The coupling means may be bayonet coupling means, suitable for a cover to be rotatably coupled to the deposit.

The present nvention may further relate to a wastewater deposit system for the enhanced deposition of residues, the system comprising the wastewater deposit of the present invention while comprising coupling means and a cover, the cover comprising coupling means which are corresponding to the coupling means of the wastewater deposit.

The deposit may specifically comprise bayonet coupling means, the coupling means of the cover being bayonet coupling means, the cover being rotatably coupled to the deposit.

The cover may have one or more openings, the one or more side openings being suitable to provide a water inlet or a sensor and, optionally, the one or more side openings having a width which corresponds to the width of a normalized watertight coupling to provide a water inlet or a sensor.

The cover may be formed by a first cover section and a second cover section, wherein the first cover section comprises coupling means and the second cover section comprises no coupling means, wherein the second cover section is rotatably coupled to the first cover section, whereby the second cover section is movable, providing an opening in the deposit through the top opening of the frustoconical portion, when the first cover section is coupled to the deposit.

The present invention may also relate to a worktop wastewater deposit assembly comprising a worktop, a wastewater deposit, a cover, and a vertical column, as further defined in claim 14.

The present invention further relates to the use of the wastewater deposit of the present invention in the treatment of water in a miniaturized system for water treatment and corresponding deposition of residues present in the water, wherein residues are removed through the bottom opening, a water suspension is introduced in the wastewater deposit through the second side opening and treated water is removed from wastewater deposit through the first side opening.

### DESCRIPTION OF DRAWINGS

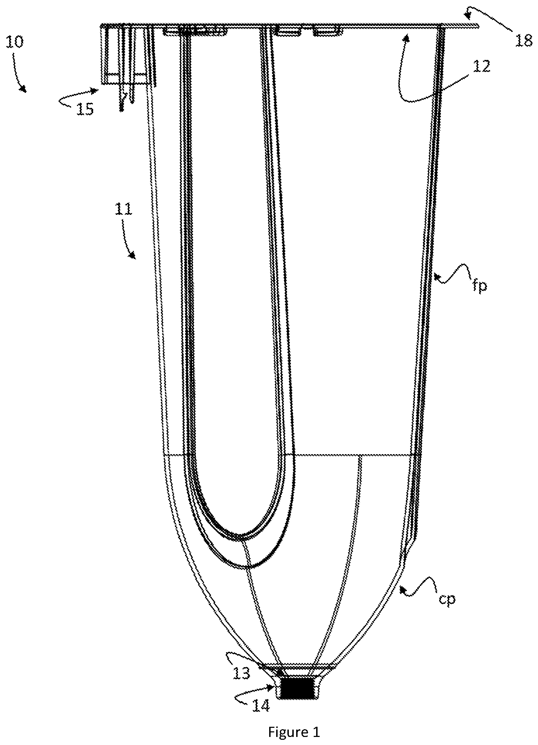

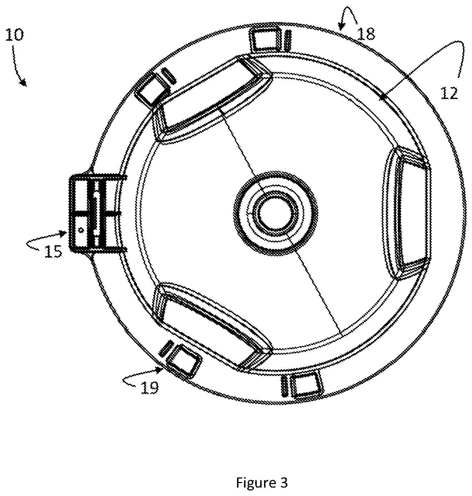

Figure 1- a longitudinal cross-section representation of a wastewater deposit (10) according to the present invention. The deposit (10) comprises a reservoir (11) with a top opening (12) and a bottom opening (13), a neck (14) with an internal thread protruding from the bottom opening (13). The reservoir (11) has a frustoconical portion (fp), which tapers from the top opening (12) until a continuous connection with the curved portion (cp). The frustoconical portion (fp) is composed, i.e., it has a substantial polyhedric form, with sides which are curved and sides which are plane. This arrangement is better observable in figure 3. Adjacent to the top opening (12) is formed a flange (18) which projects from the side wall of the reservoir (11). From such flange (18), and represented in the left top portion of the figure, are provided vertical column coupling means (15), suitable to couple to a vertical column.

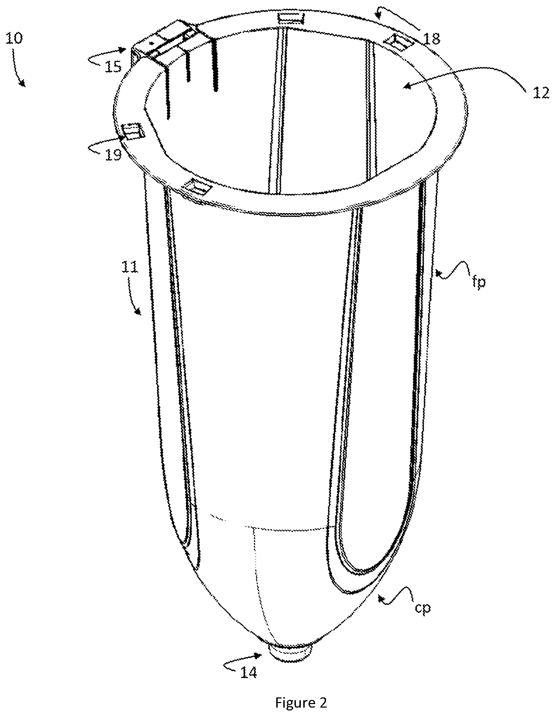

Figure 2 - a side view representation of a wastewater deposit (10) according to the present invention.
Figure 3 - a top view representation of a wastewater deposit (10) according to the present invention.

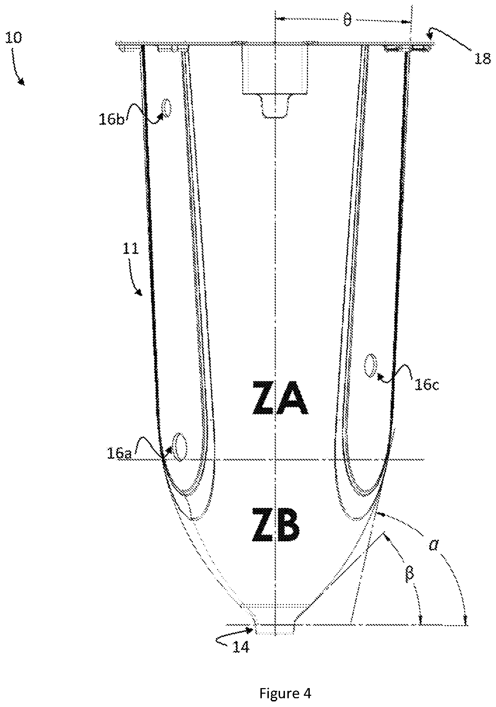

Figure 4 - a side view representation of a wastewater deposit (10) according to the present disclosure. The frustoconical portion (fp) corresponds to the area represented as ZA or Zone A. The curved portion (cp) corresponds to the area represented as ZB or Zone B. The dashed line consists of an imaginary line which divides Zone A (ZA) from Zone B (ZB), and which corresponds to the continuous connection between the frustoconical portion (fp) and the curved portion (cp). The angle α formed between the tangent to the side wall in the top of the curved portion (cp) and a perpendicular to the central axis is represented. The β angle formed between the tangent to the side wall in the bottom of the curved portion (cp) and a perpendicular to the central axis is also represented. The width of the neck (14) may be between 15 and 40 mm, for instance 22 mm. The total height of the deposit (10), including a neck (14), may be of 430,00 mm. A height of the frustoconical portion (fp) may be of 302,35 mm. The first side opening (16a) formed on the bottom left side of the frustoconical portion (fp) is suitable to provide a water outlet. The additional side opening (16c) is suitable to provide a sensor (such as a water level sensor) and the second side opening (16b) on top left defines a water inlet. The sides of the top opening (12) of the frustoconical portion (fp) may form a flange.

### DETAILED DESCRIPTION

The deposit (10) of the present invention has a reservoir (11) with a frustoconical portion (fp) and a curved portion (cp). When a water suspension of residues is provided within the deposit (10), gravity acts on such ensemble, and both water and residues are pulled by gravity. Those residues which are denser than water will aggregate in the bottom of the reservoir (11).

The combined shape of the deposit (10) of the present invention, particularly of its reservoir (11), allows that not only those residues aggregate in the bottom, but also that they aggregate faster, due to the shape of the deposit (10).

The reservoir (11) is transparent such that a user can see the inside of the reservoir (11). To such end, it may be composed of polycarbonate, particularly crystalline polycarbonate.

As the residues aggregate in the curved portion (cp) by action of gravity, they are removable through the bottom opening (13). Towards such end, a water outlet control element - such as a controllable valve - may be coupled to the bottom opening (13). Such valve may consist of a manually controllable valve or an electronically controllable valve.

The deposit (10) may further comprise a neck (14) protruding from the bottom opening (13) of the curved portion (cp), as represented in figures 1-4. A water outlet control element such as a controllable valve may be coupled to the neck (14). Such connection may be provided through a tubing which connects the neck (14) to such valve. To such end, the neck (14) may have an internally provided thread as provide in figure 1, allowing a rotatable coupling to the tubing/valve.

In addition, after the denser residues have deposited in the end of the reservoir (11), cleaner water may be removed through the first side opening (16a).

A scale may be provided on the wall of the reservoir (11), indicating several values of the volume of the reservoir (11).

The total volume of the reservoir (11) is of 4-50 l. Such volume defines the capacity that the reservoir (11) can withhold, i.e., the content providable within the reservoir (11), which may include water to be treated, is of 4-50 l. Optionally, the volume is of 4-20 l. Optionally, the volume is of 5-20 I. optionally, the volume is of 5-15 l.

As represented in the figures, the aggregation of residues in the curved portion (cp) by action of gravity is enhanced when the reservoir (11) is provided in an upright position, i.e., when an imaginary line perpendicular to an imaginary central axis - an imaginary axis provided centrally as regards the frustoconical portion (fp) and the curved portion (cp), thus also crossing the center of the bottom opening (13) -, is aligned with the gravity vector. The curved portion (cp), as shown in the figures, is convex, curving outwards.

The frustoconical portion (fp), as referred, may be of polyhedric and/or circular cross section. As provided in the figures, the frustoconical may be of a composed configuration, having a substantially polyhedric format, with sides which are plane and sides which are circular. Such configuration is best observable in figure 3. In such case, there are three plane sides and three circular sides. The additional side openings (16c) which are e.g. suitable for sensor installation may be provided in plane sides, such that installation of a corresponding sensor or inlet/outlet is simpler.

In association with the top opening (12) of the reservoir (11), a flange (18) may be provided. The flange (18) provides a perpendicular extension as regards a reservoir (11) wall, as of figure 1. The flange (18) enables a connection with elements such as a cover for the top opening (12) and a vertical column.

Also associated with the reservoir (11) wall, vertical column coupling means (15), for instance as of figure 1, may be provided. Still following figure 1, vertical column coupling means (15) allow to couple the deposit (10) to a vertical column. The vertical column coupling means (15) comprise a bottom facing recess formed from the top opening (12) of the frustoconical portion (fp) and along an external part of the frustoconical portion (fp), a top facing coupling portion of the vertical column being provided within the bottom facing recess of the deposit (10), thereby coupling the deposit (10) to the vertical column. The vertical column coupling means (15) are formed as a single piece together with the reservoir (11), projecting from its wall.

The coupling means provided in the deposit may be coupling means (19) suitable for bayonet coupling, i.e. suitable for a cover to be rotatably coupled to the deposit. Such coupling means (19) may be provided in the flange (18), comprising slots formed along the flange which projections formed in a corresponding cover engage with, in a bayonet coupling. Such coupling means are represented in figure 3.

The present invention may further relate to a wastewater deposit system for the enhanced deposition of residues, the system comprising the wastewater deposit of the present disclosure while comprising coupling means and a cover, the cover comprising coupling means which are corresponding to the coupling means of the wastewater deposit.

The deposit may specifically comprise bayonet coupling means, the coupling means of the cover being bayonet coupling means, the cover being rotatably coupled to the deposit.

As will be clear to one skilled in the art, the present invention should not be limited to the embodiments described herein, and a number of changes are possible which remain within the scope of the claims.

Of course, the preferred embodiments shown above are combinable, in the different possible forms, as long as the combinations fall within the scope of the claims, and all possible combinations are not explicitly listed here.

## Claims

1. A wastewater deposit (10) for the enhanced deposition of residues, the deposit (10) having a main reservoir (11) with a top opening (12) and a bottom opening (13), the reservoir (11) having a frustoconical portion (fp) of polyhedric and/or circular cross section and a curved portion (cp), wherein a top of the frustoconical portion (fp) forms the top opening (12), and a bottom of the curved portion (cp) forms the bottom opening (13), the bottom of the frustoconical portion (fp) connecting to the top of the curved portion (cp) forming a continuous wall of the reservoir (11), wherein
the top of the frustoconical portion (fp) is wider than the bottom of such portion,
the curved portion (cp) tapers between its top and bottom forming a curved wall of the reservoir (11), and such that its top is wider,
and the frustoconical portion (fp) has formed in its wall a first side opening (16a) suitable for forming a water outlet and a second side opening (16b) suitable to provide an inlet for a water suspension,
wherein, when a water suspension of residues is provided within the deposit (10), the residues aggregate in the curved portion (cp) by action of gravity and are removable through the bottom opening (13), and the total volume of the reservoir (11) is of 4-50 l, the reservoir (11) being transparent.

2. A wastewater deposit (10) according to the previous claim wherein the second side opening (16b) is formed in the frustoconical portion (fp) above the first side opening (16a).

3. A wastewater deposit (10) according to any of the preceding claims wherein the curved portion (cp) is convex, curving outwards.

4. A wastewater deposit (10) according to any of the preceding claims wherein, for a total volume of the reservoir (11), the volume of the curved portion (cp) is between 1/8 and 1/6 of the total volume, optionally
wherein a first tangent to the wall of the reservoir (11) in the top of the curved portion (cp) forms a first angle α of 70-85° with an imaginary line perpendicular to an imaginary central axis of the wastewater deposit (10) formed between the center of the top opening (12) of the frustoconical portion (fp) and the center of the bottom opening (13) of the curved portion (cp) and a second tangent to the wall of the reservoir (11) in the bottom of the curved portion (cp) forms a second angle β of 40-50° with the an imaginary line perpendicular to the imaginary central axis.

5. A wastewater deposit (10) according to any of the preceding claims wherein the sides of the frustoconical portion (fp) formed between its top and bottom form a 2-4° angle θ with an imaginary central axis of the wastewater deposit (10) formed between the center of the top opening (12) of the frustoconical portion (fp) and the center of the bottom opening (13) of the curved portion (cp), and/or
wherein the width of the top opening (12) of the frustoconical portion (fp) is between 150 and 500 mm, and/or the width of the bottom opening (13) of the curved portion (cp) is between 30 and 80 mm.

6. A wastewater deposit (10) according to any of the preceding claims wherein the bottom opening (13) of the curved portion (cp) is centrally provided in relation to the walls of the reservoir (11).

7. A wastewater deposit (10) according to any of the preceding claims wherein the reservoir (11) is composed of polycarbonate, optionally the reservoir (11) being composed of crystalline polycarbonate.

8. A wastewater deposit (10) according to any of the preceding claims wherein the reservoir (11) has one or more additional side openings (16c), the additional side openings (16c) being formed in the frustoconical portion (fp) and being suitable to provide a sensor, optionally
wherein the one or more additional side openings (16c) and/or the second side opening (16b) have a width which corresponds to the width of a normalized watertight coupling to provide an inlet for a water suspension or a sensor.

9. A wastewater deposit (10) according to any of the preceding claims wherein it further comprises vertical column coupling means (15), comprising a bottom facing recess formed from the top opening (12) of the frustoconical portion (fp) and along an external part of the frustoconical portion (fp), suitable for the coupling to a vertical column.

10. A wastewater deposit (10) according to any of the preceding claims wherein the top opening (12) of the frustoconical portion (fp)
is closed, forming a top surface of the reservoir (11), or
has coupling means suitable for a cover to be coupled, optionally the coupling means being bayonet coupling means, suitable for a cover to be rotatably coupled to the wastewater deposit (10).

11. A wastewater deposit system for the enhanced deposition of residues, the system comprising the wastewater deposit (10) of the previous claim and a cover, the cover comprising coupling means which are corresponding to the coupling means of the wastewater deposit (10)

12. A wastewater deposit system according to the previous claim wherein the cover has one or more cover openings, the one or more cover openings being suitable to provide a water inlet or a sensor, optionally
wherein the one or more cover openings having a width which corresponds to the width of a normalized watertight coupling to provide a water inlet or a sensor.

13. A wastewater deposit system according to claim 12 wherein the cover is formed by a first cover section and a second cover section, wherein the first cover section comprises coupling means and the second cover section comprises no coupling means, wherein the second cover section is rotatably coupled to the first cover section, whereby the second cover section is movable, providing an opening in the wastewater deposit (10) through the top opening (12) of the frustoconical portion (fp), when the first cover section is coupled to the wastewater deposit (10).

14. A worktop wastewater deposit (10) assembly comprising
- a worktop;
- a wastewater deposit according to claim 9, in which the top opening (12) of the frustoconical portion (fp) has coupling means suitable for a cover to be coupled;
- a cover comprising coupling means which are corresponding to the coupling means of the wastewater deposit, so that the cover may be coupled to the wastewater deposit (10);
- a vertical column comprising a top facing coupling portion which may be placed within the bottom facing recess of the wastewater deposit (10), thereby coupling the wastewater deposit (10) to the vertical column,
wherein the worktop wastewater deposit assembly is configured such that the vertical column is fixedly coupled to the worktop,
wherein optionally the coupling means of the frustoconical portion (fp) and of the cover are bayonet coupling means, allowing the cover to be rotatably coupled to the wastewater deposit (10).

15. Use of the wastewater deposit (10) of any of the claims 1-10 in the treatment of water in a miniaturized system for water treatment and corresponding deposition of residues present in the water, wherein residues are removed through the bottom opening (14), a water suspension is introduced in the wastewater deposit (10) through the second side opening (16b) and treated water is removed from wastewater deposit (10) through the first side opening (16a).

## Patentansprüche

1. Abwasserbehälter (10) zur verbesserten Abscheidung von Rückständen, wobei der Behälter (10) ein Hauptreservoir (11) mit einer oberen Öffnung (12) und einer unteren Öffnung (13) aufweist, wobei das Reservoir (11) einen kegelstumpfförmigen Abschnitt (fp) mit polyedrischem und/oder kreisförmigem Querschnitt und einen gekrümmten Abschnitt (cp) aufweist, wobei eine Oberseite des kegelstumpfförmigen Abschnitts (fp) die obere Öffnung (12) bildet und eine Unterseite des gekrümmten Abschnitts (cp) die untere Öffnung (13) bildet, wobei die Unterseite des kegelstumpfförmigen Abschnitts (fp) mit der Oberseite des gekrümmten Abschnitts (cp) verbunden ist und eine durchgehende Wand des Reservoirs (11) bildet, wobei
die Oberseite des kegelstumpfförmigen Abschnitts (fp) breiter ist als dessen Unterseite,
der gekrümmte Abschnitt (cp) verjüngt sich zwischen seiner Oberseite und seiner Unterseite und bildet eine gekrümmte Wand des Reservoirs (11), und zwar so, dass seine Oberseite breiter ist,
und der kegelstumpfförmige Abschnitt (fp) in seiner Wand eine erste Seitenöffnung (16a) aufweist, die zur Bildung eines Wasserauslasses geeignet ist, sowie eine zweite Seitenöffnung (16b), die zur Bereitstellung eines Einlasses für eine Wassersuspension geeignet ist,
wobei, wenn eine Wassersuspension aus Rückständen in den Behälter (10) eingebracht wird, sich die Rückstände unter Einwirkung der Schwerkraft im gekrümmten Abschnitt (cp) ansammeln und durch die untere Öffnung (13) entfernbar sind, und das Gesamtvolumen des Reservoirs (11) 4-50 l beträgt, wobei das Reservoir (11) transparent ist.

2. Abwasserbehälter (10) nach dem vorstehenden Anspruch, wobei die zweite Seitenöffnung (16b) in dem kegelstumpfförmigen Abschnitt (fp) oberhalb der ersten Seitenöffnung (16a) ausgebildet ist.

3. Abwasserbehälter (10) nach einem der vorstehenden Ansprüche, wobei der gekrümmte Abschnitt (cp) konvex ist und sich nach außen wölbt.

4. Abwasserbehälter (10) nach einem der vorstehenden Ansprüche, wobei bei einem Gesamtvolumen des Reservoirs (11) das Volumen des gekrümmten Abschnitts (cp) zwischen 1/8 und 1/6 des Gesamtvolumens liegt, gegebenenfalls
wobei eine erste Tangente an die Wand des Reservoirs (11) im oberen Bereich des gekrümmten Abschnitts (cp) einen ersten Winkel α von 70-85° mit einer imaginären Linie bildet, die senkrecht zu einer imaginären Mittelachse des Abwasserbehälters (10) verläuft, die zwischen dem Mittelpunkt der oberen Öffnung (12) des kegelstumpfförmigen Abschnitts (fp) und dem Mittelpunkt der unteren Öffnung (13) des gekrümmten Abschnitts (cp) gebildet wird, und eine zweite Tangente an der Wand des Reservoirs (11) am Boden des gekrümmten Abschnitts (cp) bildet einen zweiten Winkel β von 40-50° mit der imaginären Linie, die senkrecht zur imaginären Mittelachse verläuft.

5. Abwasserbehälter (10) nach einem der vorstehenden Ansprüche, wobei die Seiten des zwischen seinem oberen und unteren Ende gebildeten kegelstumpfförmigen Abschnitts (fp) einen Winkel θ von 2-4° mit einer imaginären Mittelachse des Abwasserbehälters (10) bilden, die zwischen dem Mittelpunkt der oberen Öffnung (12) des kegelstumpfförmigen Abschnitts (fp) und dem Mittelpunkt der unteren Öffnung (13) des gekrümmten Abschnitts (cp) gebildet wird, und/oder
wobei die Breite der oberen Öffnung (12) des kegelstumpfförmigen Abschnitts (fp) zwischen 150 und 500 mm liegt und/oder die Breite der unteren Öffnung (13) des gekrümmten Abschnitts (cp) zwischen 30 und 80 mm liegt.

6. Abwasserbehälter (10) nach einem der vorstehenden Ansprüche, wobei die untere Öffnung (13) des gekrümmten Abschnitts (cp) mittig in Bezug auf die Wände des Reservoirs (11) angeordnet ist.

7. Abwasserbehälter (10) nach einem der vorstehenden Ansprüche, wobei das Reservoir (11) aus Polycarbonat besteht, wobei das Reservoir (11) gegebenenfalls aus kristallinem Polycarbonat besteht.

8. Abwasserbehälter (10) nach einem der vorstehenden Ansprüche, wobei das Reservoir (11) eine oder mehrere zusätzliche Seitenöffnungen (16c) aufweist, wobei die zusätzlichen Seitenöffnungen (16c) im kegelstumpfförmigen Abschnitt (fp) ausgebildet und geeignet sind, einen Sensor bereitzustellen, gegebenenfalls
wobei die eine oder mehreren zusätzlichen Seitenöffnungen (16c) und/oder die zweite Seitenöffnung (16b) eine Breite aufweisen, die der Breite einer normierten wasserdichten Kupplung entspricht, um einen Einlass für eine Wassersuspension oder einen Sensor bereitzustellen.

9. Abwasserbehälter (10) nach einem der vorstehenden Ansprüche, wobei er ferner eine vertikale Säulenkupplungseinrichtung (15) umfasst, die eine nach unten gerichtete Aussparung aufweist, die von der oberen Öffnung (12) des kegelstumpfförmigen Abschnitts (fp) ausgeht und entlang eines äußeren Teils des kegelstumpfförmigen Abschnitts (fp) verläuft und zur Kupplung an eine vertikale Säule geeignet ist.

10. Abwasserbehälter (10) nach einem der vorstehenden Ansprüche, wobei die obere Öffnung (12) des kegelstumpfförmigen Abschnitts (fp)
verschlossen ist und eine Oberseite des Reservoirs (11) bildet, oder
Kupplungsmittel aufweist, die zum Kuppeln einer Abdeckung geeignet sind, wobei die Kupplungsmittel optional Bajonettkupplungsmittel sind, die dazu geeignet sind, eine Abdeckung drehbar mit dem Abwasserbehälter (10) zu kuppeln.

11. Abwasser-Ablagerungssystem zur verbesserten Abscheidung von Rückständen, wobei das System den Abwasserbehälter (10) des vorstehenden Anspruchs und eine Abdeckung umfasst, wobei die Abdeckung Kupplungsmittel umfasst, die den Kupplungsmitteln des Abwasserbehälters (10) entsprechen.

12. Abwasser-Ablagerungssystem nach dem vorstehenden Anspruch, wobei die Abdeckung eine oder mehrere Abdeckungsöffnungen aufweist, wobei die eine oder mehreren Abdeckungsöffnungen dazu geeignet sind, einen Wassereinlass oder einen Sensor bereitzustellen, gegebenenfalls
wobei die eine oder die mehreren Abdeckungsöffnungen eine Breite aufweisen, die der Breite einer genormten wasserdichten Kupplung entspricht, um einen Wassereinlass oder einen Sensor bereitzustellen.

13. Abwasser-Ablagerungssystem nach Anspruch 12, wobei die Abdeckung durch einen ersten Abdeckungsabschnitt und einen zweiten Abdeckungsabschnitt gebildet ist, wobei der erste Abdeckungsabschnitt Kupplungsmittel umfasst und der zweite Abdeckungsabschnitt keine Kupplungsmittel umfasst, wobei der zweite Abdeckungsabschnitt drehbar mit dem ersten Abdeckungsabschnitt gekoppelt ist, wodurch der zweite Abdeckungsabschnitt beweglich ist und eine Öffnung im Abwasserbehälter (10) durch die obere Öffnung (12) des kegelstumpfförmigen Abschnitts (fp) bereitstellt, wenn der erste Abdeckungsabschnitt mit dem Abwasserbehälter (10) gekoppelt ist.

14. Arbeitsplatten-Abwasserbehälter-(10)-Baugruppe, umfassend:
- eine Arbeitsplatte;
- einen Abwasserbehälter nach Anspruch 9, bei dem die obere Öffnung (12) des kegelstumpfförmigen Abschnitts (fp) Kupplungsmittel aufweist, die zum Koppeln einer Abdeckung geeignet sind;
- eine Abdeckung, die Kupplungsmittel aufweist, die den Kupplungsmitteln des Abwasserbehälters entsprechen, so dass die Abdeckung an den Abwasserbehälter (10) gekoppelt werden kann;
- eine vertikale Säule, die einen nach oben gerichteten Kupplungsabschnitt aufweist, der in die nach unten gerichtete Aussparung des Abwasserbehälters (10) eingesetzt werden kann, wodurch der Abwasserbehälter (10) mit der vertikalen Säule gekoppelt wird,
wobei die Arbeitsplatten-Abwasserbehälterbaugruppe so ausgebildet ist, dass die vertikale Säule fest mit der Arbeitsplatte gekoppelt ist,
wobei optional die Kupplungsmittel des kegelstumpfförmigen Abschnitts (fp) und der Abdeckung Bajonettkupplungsmittel sind, wodurch die Abdeckung drehbar mit dem Abwasserbehälter (10) gekoppelt werden kann.

15. Verwendung des Abwasserbehälters (10) nach einem der Ansprüche 1 bis 10 zur Wasseraufbereitung in einem miniaturisierten Wasseraufbereitungssystem und zur entsprechenden Abscheidung der im Wasser vorhandenen Rückstände, wobei die Rückstände durch die untere Öffnung (13) entfernt werden, eine Wassersuspension durch die zweite Seitenöffnung (16b) in den Abwasserbehälter (10) eingeleitet wird und aufbereitetes Wasser durch die erste Seitenöffnung (16a) aus dem Abwasserbehälter (10) abgeführt wird.

## Revendications

1. Dépôt d'eaux usées (10) destiné à améliorer le dépôt de résidus, le dépôt (10) comportant un réservoir principal (11) présentant une ouverture supérieure (12) et une ouverture inférieure (13), le réservoir (11) comportant une portion tronconique (fp) à section transversale polyédrique et/ou circulaire et une portion courbe (cp), dans lequel une partie supérieure de la portion tronconique (fp) forme l'ouverture supérieure (12), et une partie inférieure de la portion courbe (cp) forme l'ouverture inférieure (13), la partie inférieure de la portion tronconique (fp) étant reliée à la partie supérieure de la portion courbe (cp) de manière à former une paroi continue du réservoir (11), dans lequel
la partie supérieure de la portion tronconique (fp) est plus large que la partie inférieure de ladite portion,
la portion courbe (cp) se rétrécisse entre ses parties supérieure et inférieure de manière à former une paroi courbe du réservoir (11), sa partie supérieure étant ainsi plus large,
et la portion tronconique (fp) présente, dans sa paroi, une première ouverture latérale (16a) apte à former une sortie d'eau et une deuxième ouverture latérale (16b) apte à constituer une entrée pour une suspension aqueuse,
dans lequel, lorsqu'une suspension aqueuse de résidus est introduite dans le dépôt (10), les résidus s'agrègent dans la portion courbe (cp) sous l'action de la gravité et peuvent être éliminés au travers de l'ouverture inférieure (13), le volume total du réservoir (11) étant de 4 à 50 l, et le réservoir (11) étant transparent.

2. Dépôt d'eaux usées (10) selon la revendication précédente, dans lequel la deuxième ouverture latérale (16b) est formée dans la portion tronconique (fp), au-dessus de la première ouverture latérale (16a).

3. Dépôt d'eaux usées (10) selon l'une quelconque des revendications précédentes, dans lequel la portion courbe (cp) est convexe et se courbe vers l'extérieur.

4. Dépôt d'eaux usées (10) selon l'une quelconque des revendications précédentes, dans lequel, pour un volume total du réservoir (11), le volume de la portion courbe (cp) est compris entre 1/8 et 1/6 du volume total, éventuellement
dans lequel une première tangente à la paroi du réservoir (11), au niveau de la partie supérieure de la portion courbe (cp), forme un premier angle α de 70 à 85° avec une ligne imaginaire perpendiculaire à un axe central imaginaire du dépôt d'eaux usées (10) formé entre le centre de l'ouverture supérieure (12) de la portion tronconique (fp) et le centre de l'ouverture inférieure (13) de la portion courbe (cp), et une deuxième tangente à la paroi du réservoir (11), au niveau de la partie inférieure de la portion courbe (cp), forme un deuxième angle β de 40 à 50° avec ladite ligne imaginaire perpendiculaire à l'axe central imaginaire.

5. Dépôt d'eaux usées (10) selon l'une quelconque des revendications précédentes, dans lequel les côtés de la portion tronconique (fp) formés entre ses parties supérieure et inférieure forment un angle θ de 2 à 4° avec un axe central imaginaire du dépôt d'eaux usées (10) formé entre le centre de l'ouverture supérieure (12) de la portion tronconique (fp) et le centre de l'ouverture inférieure (13) de la portion courbe (cp), et/ou
dans lequel la largeur de l'ouverture supérieure (12) de la portion tronconique (fp) est comprise entre 150 et 500 mm, et/ou la largeur de l'ouverture inférieure (13) de la portion courbe (cp) est comprise entre 30 et 80 mm.

6. Dépôt d'eaux usées (10) selon l'une quelconque des revendications précédentes, dans lequel l'ouverture inférieure (13) de la portion courbe (cp) est disposée de manière centrale par rapport aux parois du réservoir (11).

7. Dépôt d'eaux usées (10) selon l'une quelconque des revendications précédentes, dans lequel le réservoir (11) est constitué de polycarbonate, éventuellement le réservoir (11) étant constitué de polycarbonate cristallin.

8. Dépôt d'eaux usées (10) selon l'une quelconque des revendications précédentes, dans lequel le réservoir (11) présente une ou plusieurs ouvertures latérales supplémentaires (16c), les ouvertures latérales supplémentaires (16c) étant formées dans la portion tronconique (fp) et étant aptes à recevoir un capteur, éventuellement
dans lequel la ou les ouvertures latérales supplémentaires (16c) et/ou la deuxième ouverture latérale (16b) présentent une largeur correspondant à la largeur d'un raccord étanche normalisé destiné à constituer une entrée pour une suspension aqueuse ou un capteur.

9. Dépôt d'eaux usées (10) selon l'une quelconque des revendications précédentes, lequel comprend en outre des moyens de couplage (15) à une colonne verticale, comprenant un évidement orienté vers le bas, formé à partir de l'ouverture supérieure (12) de la portion tronconique (fp) et le long d'une partie externe de la portion tronconique (fp), apte à permettre le couplage à une colonne verticale.

10. Dépôt d'eaux usées (10) selon l'une quelconque des revendications précédentes, dans lequel l'ouverture supérieure (12) de la portion tronconique (fp)
est fermée, formant une surface supérieure du réservoir (11), ou
présente des moyens de couplage aptes à permettre le couplage d'un couvercle, éventuellement les moyens de couplage étant des moyens de couplage à baïonnette, aptes à permettre le couplage rotatif d'un couvercle au dépôt d'eaux usées (10).

11. Système de dépôt d'eaux usées destiné à améliorer le dépôt de résidus, le système comprenant le dépôt d'eaux usées (10) selon la revendication précédente et un couvercle, le couvercle comprenant des moyens de couplage correspondant aux moyens de couplage du dépôt d'eaux usées (10).

12. Système de dépôt d'eaux usées selon la revendication précédente, dans lequel le couvercle présente une ou plusieurs ouvertures de couvercle, la ou les ouvertures de couvercle étant aptes à constituer une entrée d'eau ou à recevoir un capteur, éventuellement dans lequel la ou les ouvertures de couvercle présentent une largeur correspondant à la largeur d'un raccord étanche normalisé destiné à constituer une entrée d'eau ou à recevoir un capteur.

13. Système de dépôt d'eaux usées selon la revendication 12, dans lequel le couvercle est formé d'une première partie de couvercle et d'une deuxième partie de couvercle, dans lequel la première partie de couvercle comprend des moyens de couplage et la deuxième partie de couvercle ne comprend aucun moyen de couplage, dans lequel la deuxième partie de couvercle est couplée de manière rotative à la première partie de couvercle, de sorte que la deuxième partie de couvercle est mobile et permet de créer une ouverture dans le dépôt d'eaux usées (10) au travers de l'ouverture supérieure (12) de la portion tronconique (fp), lorsque la première partie de couvercle est couplée au dépôt d'eaux usées (10).

14. Ensemble de dépôt d'eaux usées (10) sur plan de travail comprenant :
- un plan de travail ;
- un dépôt d'eaux usées selon la revendication 9, dans lequel l'ouverture supérieure (12) de la portion tronconique (fp) présente des moyens de couplage aptes à permettre le couplage d'un couvercle ;
- un couvercle comprenant des moyens de couplage correspondant aux moyens de couplage du dépôt d'eaux usées, de sorte que le couvercle peut être couplé au dépôt d'eaux usées (10) ;
- une colonne verticale comprenant une partie de couplage orientée vers le haut, qui peut être disposée à l'intérieur de l'évidement orienté vers le bas du dépôt d'eaux usées (10), couplant ainsi le dépôt d'eaux usées (10) à la colonne verticale,
dans lequel l'ensemble de dépôt d'eaux usées sur plan de travail est configuré de sorte que la colonne verticale est fixement couplée au plan de travail,
dans lequel, éventuellement, les moyens de couplage de la portion tronconique (fp) et du couvercle sont des moyens de couplage à baïonnette, permettant le couplage rotatif du couvercle au dépôt d'eaux usées (10).

15. Utilisation du dépôt d'eaux usées (10) d'une quelconque des revendications 1 à 10 dans le traitement de l'eau dans un système miniaturisé de traitement de l'eau et pour le dépôt correspondant des résidus présents dans l'eau, où les résidus sont éliminés au travers de l'ouverture inférieure (13), une suspension aqueuse est introduite dans le dépôt d'eaux usées (10) au travers de la deuxième ouverture latérale (16b) et l'eau traitée est évacuée du dépôt d'eaux usées (10) au travers de la première ouverture latérale (16a).
